# EUROPÄISCHE PATENTANMELDUNG

(11) **EP 2 348 183 A1**
(43) Veröffentlichungstag der Anmeldung: **27.07.2011**
(21) Anmeldenummer: 11151621.7
(22) Anmeldetag: 21.01.2011
(51) Int. Cl.: E06B 3/20, B29C 44/08, B29C 44/12

(54) **Verfahren zur Herstellung eines Profilelements mit Profileinlagen**

(30) Priorität: 23.01.2010 DE 102010005503
(71) Anmelder: Raico Bautechnik GmbH, 87772 Pfaffenhausen (DE)
(72) Erfinder: Vögele, Rainer, 86470 Thannhausen (DE)
(74) Vertreter: Charrier, Rapp & Liebau

(57) **Zusammenfassung**

Die Erfindung betrifft ein Verfahren zur Herstellung eines Profilelements aus Kunststoff mit einem geschäumten Kern und einer den Kern umgebenden härteren Außenhaut mit folgenden Schritten:
a) Einbringen eines aushärtenden Schaummaterials in eine einen ersten Hohlraum begrenzende erste Form zur Herstellung des Kerns;
b) Entnahme des Kerns aus der ersten Form nach der Aushärtung des Schaummaterials;
c) Einsetzen des Kerns in eine einen zweiten Hohlraum begrenzende zweite Form;
d) Einbringen eines aushärtenden weiteren Kunststoffmaterials in die zweite Form zur Herstellung der härteren Außenhaut und
e) Entnahme des fertigen Profilelements aus der zweiten Form nach der
Aushärtung des weiteren Kunststoffmaterials, wobei
bei der Herstellung des Kerns vor dem Einbringen des aushärtenden Schaummaterials in die erste Form an mindestens einer den ersten Hohlraum begrenzenden Fläche der ersten Form mindestens eine Profileinlage mit einem nach außen offenen Aufnahmekanal eingelegt wird.

## Beschreibung

Die Erfindung betrifft ein Verfahren zur Herstellung eines Profilelements mit Profileinlagen, ein nach diesem Verfahren hergestelltes Profilelement und eine Form zur Herstellung eines solchen Profilelements.

Aus der DE 10 2008 009 495 A1 ist ein Verfahren zur Herstellung einer Profilleiste mit einem geschäumten Dämmkern und einer den Dämmkern umgebenden Umhüllung bekannt, bei dem der Dämmkern durch Eintragen eines Schaummaterials in ein erstes Formwerkzeug hergestellt wird. Nach der Aushärtung des Dämmkerns wird dieser aus dem ersten Formwerkzeug entnommen und in ein zweites Formwerkzeug eingelegt. Anschließend wird ein Hüllmaterial in das zweite Formwerkzeug eingebracht, um eine den Dämmkern umschließende Umhüllung zu erzeugen. Nach der Aushärtung des Hüllmaterials kann dann die fertige Profilleiste aus dem zweiten Formwerkzeug entnommen werden. In dieser Druckschrift ist auch bereits offenbart, dass vor dem Eintragen des Schaummaterials eine stabilitätserhöhende Fasereinlage, ein Rohr aus Kunststoff oder ein Beschlagteil in das erste oder zweite Formwerkzeug eingelegt werden kann.

Aufgabe der Erfindung ist es, ein Verfahren zur Herstellung eines Profilelements mit Profileinlagen, ein nach diesem Verfahren hergestelltes Profilelement und eine Form zur Herstellung eines solchen Profilelements zu schaffen, die eine vereinfachte Befestigung von Beschlagteilen, Dichtungen oder anderen Anbauteilen an dem Profilelement ermöglichen.

Diese Aufgabe wird durch ein Verfahren mit den Merkmalen des Anspruchs 1, durch ein Profilelement mit den Merkmalen des Anspruchs 8 und durch ein Formwerkzeug mit den Merkmalen des Anspruchs 14 gelöst. Zweckmäßige Ausgestaltungen und vorteilhafte Weiterbildungen der Erfindung sind in den Unteransprüchen angegeben.

Bei dem erfindungsgemäßen Verfahren wird bei der Herstellung des Kerns vor dem Einbringen des aushärtenden Schaummaterials in die erste Form an mindestens einer den ersten Hohlraum begrenzenden Fläche der ersten Form mindestens eine Profileinlage mit einem nach außen offenen Aufnahmekanal eingelegt. Die Profileinlagen können zum Einbau von Dichtungen, Beschlagteilen oder anderen Anbauteilen dienen, wobei die Profilelemente optimale Dämmeigenschaften gewährleisten können und im Bereich der Profileinlagen dennoch eine gute Stabilität für die Anordnung von weiteren Bauteile erreicht wird.

Die Profileinlagen können aus Hartkunststoff, Metall oder anderen geeigneten Materialien hergestellt sein.

Zur sichereren Positionierung der Profileinlagen innerhalb der ersten Form werden diese zweckmäßigerweise auf Haltestege an mindestens einer den Hohlraum begrenzenden Fläche aufgesteckt. Wenn die Aufnahmekanäle in Öffnungsrichtung der üblicherweise aus zwei Teilen bestehenden Form liegen, können die Profileinlagen mit ihrem Aufnahmekanal auf den Haltesteg ausgesteckt werden. Die Form des Haltestegs ist dann zweckmäßigerweise an die Form des Aufnahmekanals angepasst. Die Profileinlagen können aber auch über gesonderte äußere Haltenuten auf einen entsprechenden Haltesteg aufgesteckt oder auf andere Weise fixiert werden.

Das erfindungsgemäße Profilelement zeichnet sich dadurch aus, dass in den Kern mindestens eine an der Außenseite angeordnete Profileinlage mit einem nach außen offenen Aufnahmekanal eingelegt ist.

Die Profileinlage kann mindestens einen in den Kern ragenden Verankerungssteg enthalten, an dem zur besseren Verankerung auch noch Durchbrüche und/oder Ausbrüche vorgesehen sein können.

Der Kern besteht vorzugsweise aus leichtem PU-Schaum mit einer Wärmeleitfähigkeit von λ = 0,02 bis 0,06 W/m²K, bevorzugt 0,025 W/m²K, Dadurch wird eine gute Dämmung erreicht. Die harte Außenhaut, die vorzugsweise aus einer schwereren PU-Mischung mit einer Härte ähnlich von Hart PVC und einer Wärmeleitfähigkeit von λ = 0,15 bis 0,6 W/m²K besteht, sorgt dagegen für die erforderliche Festigkeit und Stabilität.

Die Erfindung betrifft außerdem ein Formwerkzeug zur Herstellung eines Profilelements aus Kunststoff mit einem geschäumten Kern und einer den Kern umgebenden härteren Außenhaut, das eine erste Form mit einem an die Außenkontur des Kerns angepassten Hohlraum und eine zweite Form zur Herstellung der härteren Außenhaut enthält. Erfindungsgemäß ist an mindestens einer der den Hohlraum begrenzenden Flächen der ersten Form mindestens ein Haltesteg zur Fixierung der Profileinlage angeformt.

Zweckmäßigerweise ist die Form und Abmessung des Haltestegs an die Form und Abmessung eines Aufnahmekanals oder einer Haltenut an der Profileinlage angepasst.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel eines Profilelements mit Profileinlagen im Schnitt;
- **Figur 2a, 2b**: Detailansichten unterschiedlicher Profileinlagen im Bereich Y von Figur 1;
- **Figur 3a, 3b, 3c**: Detailansichten unterschiedlicher Profileinlagen im Bereich Z von Figur 1;
- **Figur 4a, 4b**: Detailansichten unterschiedlicher Profileinlagen im Bereich X von Figur 1;
- **Figur 5**: eine erste Form zur Herstellung des Kerns des Profilelements von Figur 1;
- **Figur 6**: die in Figur 1 gezeigte erste Form mit dem Kern des Profilelements von Figur 1;
- **Figur 7**: eine zweite Form zur Herstellung der härteren Außenhaut des Profilelements von Figur 1 und
- **Figur 8**: die in Figur 1 gezeigte zweite Form mit dem Profilelement von Figur 1.

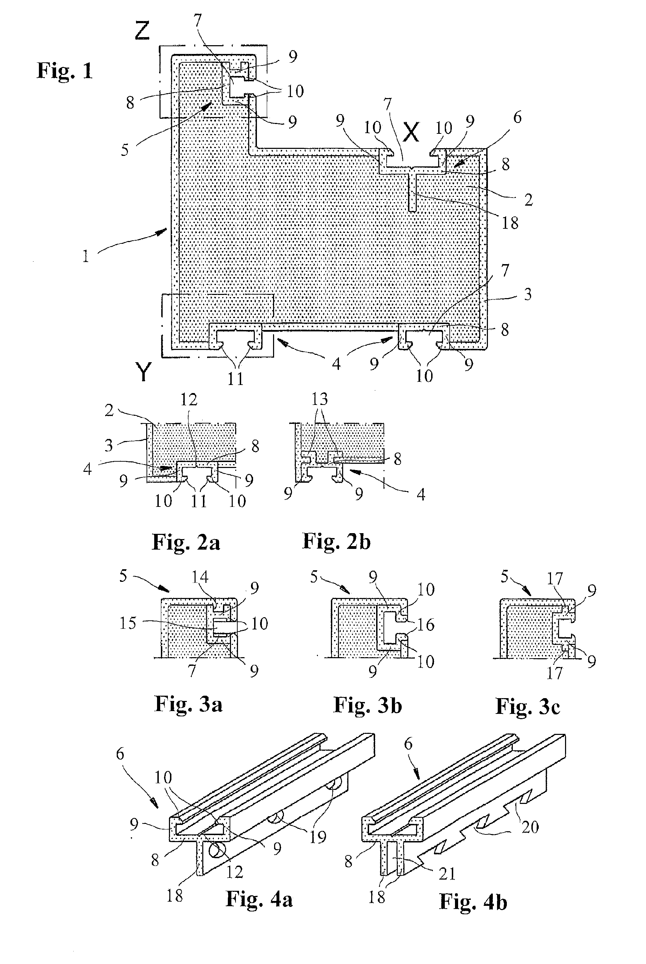

In Figur 1 ist ein aus Kunststoff bestehendes Profilelement 1 mit einem vorzugsweise aus Polyurethanschaum bestehenden Kern 2 und einer gegenüber dem Kern 2 härteren Außenhaut 3 aus Polyurethan gezeigt. In dem Profilelement 1 sind aus PVC oder aus anderen Hartkunststoffen bestehende Profileinlagen 4, 5 und 6 eingelegt. Derartige Profilelemente 1 werden für Fenster-, Tür- oder Fassadenkonstruktionen eingesetzt.

Zur Erreichung guter Dämmeigenschaften und hoher Festigkeitswerte besteht das Profilelement 1 zweckmäßigerweise aus einem Zweikomponenten-Polyurethan mit einem weicheren Kern 2 aus leichtem PU-Schaum und einer Wärmeleitfähigkeit von λ = 0,02 bis 0,06 W/m²K, bevorzugt 0,025 W/m²K. Durch den leichten PU-Schaum wird eine gute Dämmung erreicht. Die härtere Außenhaut 3 besteht zweckmäßigerweise aus einer schwereren PU-Mischung mit einer Härte ähnlich von Hart - PVC und weist vorzugsweise eine Wärmeleitfähigkeit von λ = 0,15 bis 0,6 W/m²K auf. Durch den Kern 2 aus leichtem PU-Schaum wird eine gute Dämmung erreicht, während die härtere Außenhaut 3 für die erforderliche Festigkeit und Stabilität sorgt. Die vorzugsweise aus PVC oder einem anderen Hartkunststoff bestehenden Profileinlagen 4, 5 und 6 sind z.B. für die Aufnahme von Halteelementen zur Befestigung von Beschlagteilen, zur Aufnahme von Dichtungen und dgl. bestimmt.

Wie aus den Figuren hervorgeht, weisen die in dem Profilelement 1 angeordneten Profileinlagen 4, 5 und 6 einen nach außen offenen, im Querschnitt im Wesentlichen T-förmigen Aufnahmekanal 7 auf, der durch zwei von einer Grundplatte 8 vorstehende, parallele Seitenstege 9 und zwei am oberen Ende der Seitenstege 9 rechtwinklig nach innen vorstehende Endstege 10 begrenzt wird. Die Endstege 10 können zur einfacheren Einsetzen von Beschlag- oder Halteelementen in den Aufnahmekanal 7 mit Abschrägungen 11 versehen sein.

In Figur 2a ist ein erstes Ausführungsbeispiel einer Profileinlage 4 gezeigt. Bei dieser Ausführung weisen die von den Seitenstegen 9 nach innen gerichteten Endstege 10 Abschrägungen 11 auf. An der Innenseite der Grundplatte 8 ist eine Kerbe 12 für die Zentrierung einer Schraube oder eines anderen Befestigungselements vorgesehen. Die Grundplatte 8 ist eben ausgeführt und weist keine zusätzlichen Verankerungsstege auf. Bei dem in Figur 2b dargestellten Ausführungsbeispiel einer weiteren Profileinlage 4 sind dagegen an der Grundplatte 8 zusätzliche Verankerungsstege 13 angeformt. Ansonsten entspricht diese Profileinlage 4 der Ausführungsform von Figur 2a.

In den Figuren 3a bis 3b sind verschiedene Ausführungsbeispiele einer weiteren Profileinlage 5 gezeigt. Bei der in Figur 3a dargestellten Ausführung enthält die Profileinlage 5 neben dem durch die beiden Seitenstege 9 und die Endstege 10 begrenzten inneren Aufnahmekanal 7 eine zusätzliche äußere Haltenut 14 zur Halterung in einem im Folgenden noch näher erläuterten Formteil eines Formwerkzeugs. Die in Figur 3b gezeigte Profileinlage 5 weist an den nach innen ragenden Endstegen 10 nach außen vorstehende Ansätze 16 auf. Bei dem in Figur 3c gezeigten Ausführungsbeispiel einer weiteren Profileinlage 5 sind an der Außenseite der Seitenstege 9 weitere Verankerungsstege 17 vorgesehen.

Die in den Figuren 4a und 4b gezeigten Profileinlagen 6 weisen einen oder mehrere von der Grundplatte 8 nach außen vorstehende, in den Kern 2 des Profilelements 1 ragende Verankerungsstege 18 auf. Bei der in Figur 4a dargestellten Ausführung ist an der Außenseite der Grundplatte 8 lediglich ein Verankerungssteg 18 mit darin vorgesehenen Durchgangsöffnungen 19 angeformt. Auf der Innenseite der Grundplatte 8 ist auch hier eine Kerbe 12 zur Zentrierung einer Befestigungsschraube vorgesehen. Bei der in Figur 4b dargestellten Ausführung sind dagegen an der Außenseite der Grundplatte 8 zwei voneinander beabstandete, parallele Verankerungsstege 18 mit Ausbrüchen 20 angeformt. Durch die beiden voneinander beabstandeten Verankerungsstege 18 wird ein Führungskanal 21 für eine Befestigungsschraube oder dgl. begrenzt.

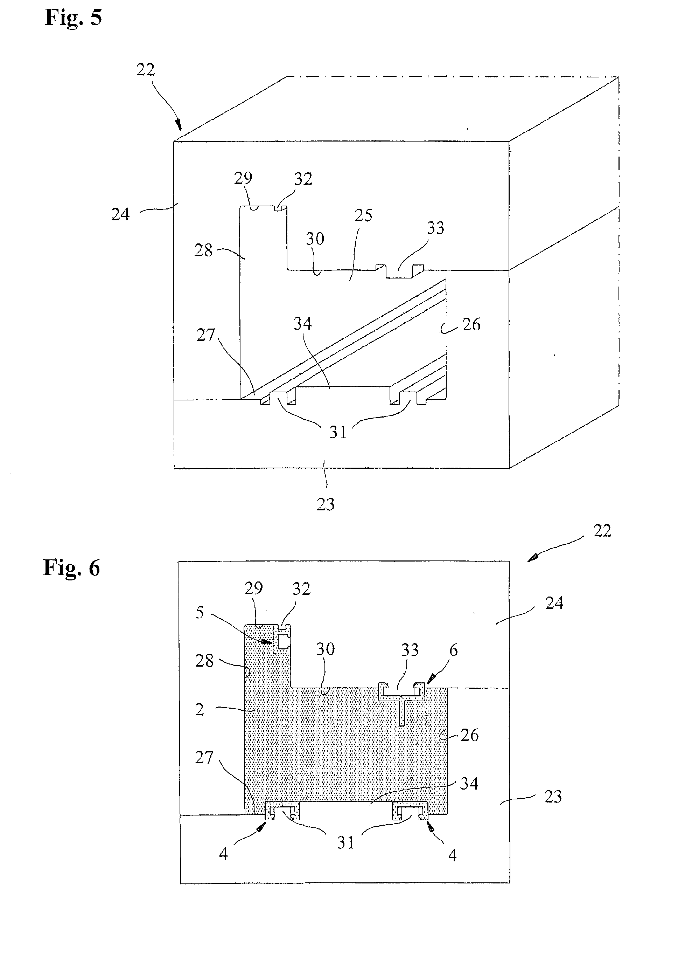

In den Figuren 5 und 6 ist eine erste Form 22 zur Herstellung des Kerns 2 des in Figur 1 gezeigten Profilelements 1 gezeigt. Die aus einem Unterteil 23 und einem Oberteil 24 gebildete erste Form 22 weist einen an die Außenkontur des Kerns 2 angepassten Hohlraum 25 auf. Der Hohlraum 25 wird durch eine Seitenfläche 26 und obere Flächen 27 des Unterteils 23 sowie durch eine Seitenfläche 28 und untere Flächen 29 und 30 des Oberteils 24 begrenzt. An den sich beim Öffnen der ersten Form 22 voneinander weg bewegenden oberen Flächen 28 des Unterteils 23 und den unteren Flächen 29 und 30 des Oberteils 24 sind Haltestege 31, 32 und 33 zur Fixierung der in Figur 1 gezeigten Profileinlagen 4, 5 und 6 vorgesehen. Auf die Haltestege 31 an dem Unterteil 23 sind die in Figur 2a dargestellten Profileinlagen 4 aufsetzbar. Auf den Haltesteg 32 am Oberteil 24 wird die in Figur 3a gezeigte Profileinlage 5 und auf den Haltesteg 33 die in Figur 4a dargestellte Profileinlage 6 aufgesteckt. Zwischen den beiden Haltestegen 31 an dem Unterteil 23 ist ein weiterer Steg 34 vorgesehen. Wenn sich die Aufnahmekanäle 7 wie bei den Profileinlagen 4 und 6 des in Figur 1 gezeigten Profilelements 1 in der Öffnungsrichtung der ersten Form 22 befinden, können die Profileinlagen mit ihren Aufnahmekanälen 7 auf die Haltestege 31 und 33 aufgesteckt werden. Wenn die Aufnahmekanäle 7 der Profileinlagen jedoch wie bei der in Figur 1 gezeigten Profileinlage 5 quer zur Öffnungsrichtung der ersten Form 22 liegen, muss an der Profileinlage 5 eine in Figur 3a gezeigte zusätzliche Haltenut 14 vorgesehen sein,

Nach dem Aufstecken der Profileinlagen 4, 5 und 6 auf die entsprechenden Haltestege 31, 32 und 33 und Schließen der ersten Form 22 kann ein aushärtendes Schaummaterial in die erste Form 22 eingebracht und so der in Figur 6 gezeigte weiche Kern 2 mit den eingeschäumten Profileinlagen 4, 5 und 6 hergestellt werden.

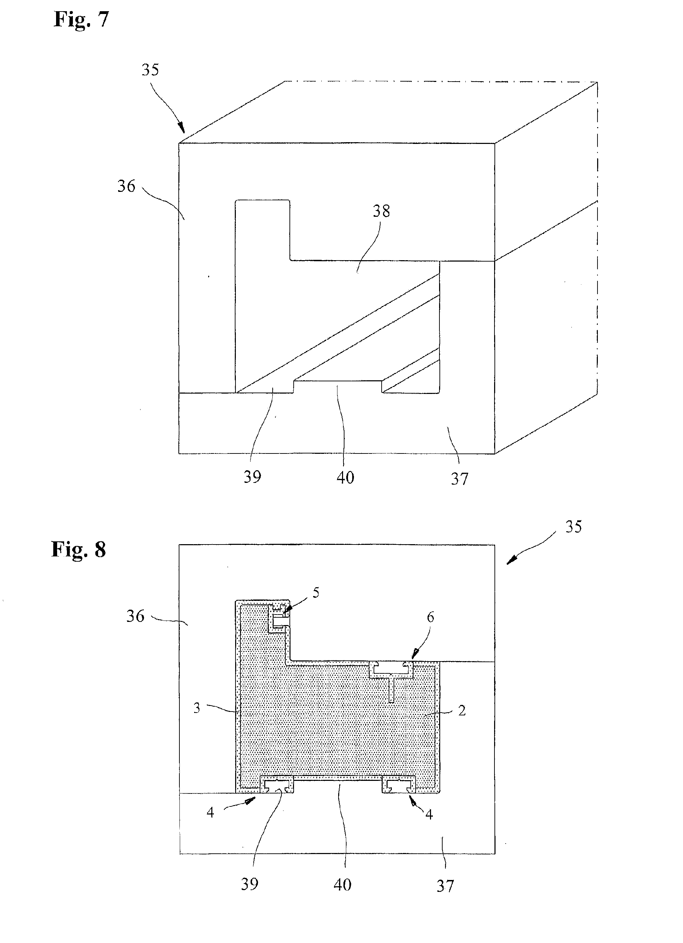

Nach dem Aushärten des Kerns 2 wird dieser in eine in den Figuren 7 und 8 dargestellte zweite Form 35 eingesetzt. Auch die zweite Form besteht aus einem Oberteil 36 und einem Unterteil 37, zwischen denen ein Hohlraum 38 gebildet wird. Der Hohlraum 38 entspricht der gewünschten Außenkontur des Profilelements 1 und ist um die Stärke der Außenhaut 3 größer als der Hohlraum 25 der ersten Form 22 ausgebildet. An einer oberen Fläche 39 des Unterteils 37 ist ein an den Abstand der beiden Profileinlagen 4 angepasster Steg 40 vorgesehen. Auf diesen Steg 40 ist der Kern zur Herstellung der härteren Außenhaut 3 aufsetzbar. Der Steg 40 weist eine um die Stärke der Außenhaut 3 geringere Höhe als die Profileinlagen 4 auf, so dass zwischen den auf der oberen Fläche 39 des Unterteils 37 aufliegenden Profileinlagen eine Außenhaut gebildet werden kann. Nach dem Einlagen des Kerns in das Unterteil 37 und Schließen des Oberteils 36 kann in die zweite Form 35 ein im weiteres Kunststoffmaterial zur Bildung der härteren Außenhaut 3 eingespritzt werden.

Die Erfindung ist nicht auf die in der Zeichnung dargestellten und in der Beschreibung ausführlich erläuterten Ausführungsbeispiele beschränkt. Die bezüglich der einzelnen Ausführungen beschriebenen Merkmale sind auch beliebig mit den anderen Ausführungen kombinierbar.

## Patentansprüche

1. Verfahren zur Herstellung eines Profilelements (1) aus Kunststoff mit einem geschäumten Kern (2) und einer den Kern (2) umgebenden härteren Außenhaut (3) mit folgenden Schritten:
a) Einbringen eines aushärtenden Schaummaterials in eine einen ersten Hohlraum (25) begrenzende erste Form (22) zur Herstellung des Kerns (2);
b) Entnahme des Kerns (2) aus der ersten Form (22) nach der Aushärtung des Schaummaterials;
c) Einsetzen des Kerns (2) in eine einen zweiten Hohlraum (38) begrenzende zweite Form (35);
d) Einbringen eines aushärtenden weiteren Kunststoffmaterials in die zweite Form (35) zur Herstellung der härteren Außenhaut (3) und
e) Entnahme des fertigen Profilelements (1) aus der zweiten Form (35) nach der
Aushärtung des weiteren Kunststoffmaterials,
**dadurch gekennzeichnet,**
**dass** bei der Herstellung des Kerns (2) vor dem Einbringen des aushärtenden Schaummaterials in die erste Form (22) an mindestens einer den ersten Hohlraum (25) begrenzenden Fläche (27, 29, 30) der ersten Form (22) mindestens eine Profileinlage (4, 5, 6) mit einem nach außen offenen Aufnahmekanal (7) eingelegt wird.

2. Verfahren nach Anspruch 1, **dadurch gekennzeichnet, dass** die Profileinlage (4, 5, 6) auf einen an der den ersten Hohlraum (25) begrenzenden Fläche (27, 29, 30) der ersten Form (22) angeordneten Haltesteg (31, 32, 33) fixiert wird.

3. Verfahren nach Anspruch 2, **dadurch gekennzeichnet, dass** die Profileinlage (4, 5, 6) mit ihrem Aufnahmekanal (7) auf den Haltesteg (31, 33) aufgesteckt wird.

4. Verfahren nach Anspruch 2, **dadurch gekennzeichnet, dass** die Profileinlage (5) über eine äußere Haltenut (14) auf den Haltesteg (33) aufgesteckt wird.

5. Verfahren nach einem der Ansprüche 1 bis 4, **dadurch gekennzeichnet, dass** die Profileinlage (5) aus Hartkunststoff besteht.

6. Verfahren nach einem der Ansprüche 1 bis 5, **dadurch gekennzeichnet, dass** in die erste Form (22) ein leichter PU-Schaum mit guten Dämmeigenschaften eingespritzt wird.

7. Verfahren nach einem der Ansprüche 1 bis 6, **dadurch gekennzeichnet, dass** in die zweite Form (35) eine schwerere PU-Mischung mit guten Festigkeitseigenschaften eingespritzt wird.

8. Profilelement (1) mit einem geschäumten Kern (2) und einer den Kern (2) umgebenden härteren Außenhaut (3), **dadurch gekennzeichnet, dass** in den Kern (2) mindestens eine an der Außenseite angeordnete Profileinlage (4, 5, 6) mit einem nach außen offenen Aufnahmekanal (7) eingelegt ist.

9. Profilelement (1) nach Anspruch 8, **dadurch gekennzeichnet, dass** der Aufnahmekanal (7) der Profileinlage (4, 5, 6) durch zwei von einer Grundplatte (8) vorstehende parallele Seitenstege (9) und an oberen Ende der Seitenstege (9) rechtwinklig nach innen vorstehende Endstege (10) begrenzt wird.

10. Profilelement (1) nach Anspruch 8 oder 9, **dadurch gekennzeichnet, dass** die Profileinlage (4, 5, 6) mindestens einen in den Kern (2) ragenden Verankerungssteg (13, 17, 18) enthält.

11. Profilelement (1) nach Anspruch 10, **dadurch gekennzeichnet, dass** in dem Verankerungssteg (18) Durchgangsöffnungen (19) und/oder Ausbrüche (20) vorgesehen sind.

12. Profilelement (1) nach einem der Ansprüche 8 bis 12, **dadurch gekennzeichnet, dass** der Kern (2) aus einem leichten Polyurethanschaum mit einer Wärmeleitfähigkeit von λ = 0,02 bis 0,06 W/m²K, bevorzugt 0,025 W/m²K, besteht.

13. Profilelement (1) nach einem der Ansprüche 8 bis 13, **dadurch gekennzeichnet, dass** die Außenhaut (11) aus einer Polyurethanmischung mit einer gegenüber dem Kern (12) größeren Shorehärte und einer Wärmeleitfähigkeit von λ = 0,15 bis 0,6 W/m²K besteht.

14. Formwerkzeug zur Herstellung eines Profilelements (1) aus Kunststoff mit einem geschäumten Kern (2) und einer den Kern (2) umgebenden härteren Außenhaut (3), das eine erste Form (22) mit einem an die Außenkontur des Kerns (2) angepassten Hohlraum (25) und eine zweite Form (35) zur Herstellung der härteren Außenhaut (3) enthält, **dadurch gekennzeichnet, dass** an mindestens einer der den Hohlraum (25) begrenzenden Flächen (27, 29, 30) der ersten Form (22) mindestens ein Haltesteg (31, 32, 33) zur Fixierung von Profileinlagen (4, 5, 6) angeformt ist.

15. Formwerkzeug nach Anspruch 15, **dadurch gekennzeichnet, dass** die Form und Abmessung des Haltestegs (31, 32, 33) an die Form und Abmessung eines Aufnahmekanals (7) oder einer Haltenut (14) an der Profileinlage (4, 5, 6) angepasst ist.
